# EUROPÄISCHE PATENTSCHRIFT

(11) **EP 0 496 959 B1**
(45) Veröffentlichungstag und Bekanntmachung des Hinweises auf die Patenterteilung: **14.12.1994**
(21) Anmeldenummer: 91119153.4
(22) Anmeldetag: 11.11.1991
(51) Int. Cl.: F16F 13/00, B60K 5/12

(54) **Hydraulisch dämpfendes Gummilager**
Hydrautically damped elastic support
Support élastique amorti hydrauliquement

(30) Priorität: 01.02.1991 DE 4103012
(43) Veröffentlichungstag der Anmeldung: 05.08.1992
(73) Patentinhaber: Boge GmbH, D-53783 Eitorf (DE)
(72) Erfinder: Fiene, Rüdiger, W-5300 Bonn-Bad Godesberg (DE); Mayerböck, Wilhelm, W-5483 Kirchdaun (DE)

(56) Entgegenhaltungen:
- EP-A- 0 335 005
- DE-A- 3 717 026
- GB-A- 2 010 438
- PATENT ABSTRACTS OF JAPAN vol. 10, no. 70 (M-462)(2127) 19. März 1986
- PATENT ABSTRACTS OF JAPAN vol. 10, no. 29 (M-451)(2086) 5. Februar 1986

## Beschreibung

Die Erfindung bezieht sich auf ein hydraulisch dämpfendes Gummilager, bestehend aus einem in radialer Richtung geteilten Innenteil, einem hierzu in radialem Abstand angeordneten Außenteil, einer zwischen Innenteil und Außenteil eingesetzten Gummifeder und einem zusätzlichen Bauteil, in welchem Gummilager mindestens zwei dämpfungsmittelgefüllte, hydraulisch über mindestens einen Drosselkanal miteinander verbundene Kammern vorgesehen sind, wobei mindestens eine der Kammern in mindestens einem Teilbereich ihrer axialen Begrenzung durch eine einstückig mit der Gummifeder ausgebildete, axial und/oder radial verformbare, membranartige Stirnwand begrenzt ist und wobei das zusätzliche Bauteil den Drosselkanal aufweist.

Es sind bereits hydraulisch dämpfende Gummilager bekannt (z.B. DE-OS 37 36 162, die zur Bildung des Oberbegriffs herangezogen wurde), bei denen ein Außen- und ein Innenrohr durch einen Federkörper miteinander verbunden sind, wobei der Federkörper zwei in Richtung der eingeleiteten Schwingungen hintereinanderliegende Kammern enthält, die durch eine Öffnung verbunden und mit Flüssigkeit gefüllt sind. Eine der Kammern ist dabei in mindestens einem Teilbereich ihrer axialen Begrenzung durch eine einstückig mit dem Federkörper ausgebildete, axial verschiebbaren Stirnwand begrenzt. Innerhalb der Kammern verläuft im Bereich des Außenrohres die als Kanal ausgebildete Öffnung, wobei darüber hinaus Anschlagpuffer in den Kammern vorgesehen sind. Bei einem derartigen Gummilager ist von Nachteil, daß die als Kanal ausgebildete Öffnung einer aufwendigen Abdichtung bedarf, so daß es zwischen dem Kanal und den Kammern zu keiner Undichtigkeit kommt. Darüber hinaus sind die Anschläge am Kanalbauteil anvulkanisiert, so daS bei der Herstellung des Kanalbauteiles dafür Sorge getragen werden muß, daß kein Gummi in den eigentlichen Kanal gelangen kann.

Aufgabe der Erfindung ist es, ein hydraulisch dämpfendes Gummilager so weiterzubilden, daß der Drosselkanal in einem einfachen, leicht zu montierenden Bauteil untergebracht wird, welches gleichzeitig eine gute Abdichtung und Montage gegenüber dem Innenteil gewährleistet.

Zur Lösung dieser Aufgabe ist vorgesehen, daß das zusätzliche Bauteil zweigeteilt ist durch eine radial verlaufende Trennebene, in der der Drosselkanal durch die einander zugewandten Stirnseiten der beiden Hälften des zusätzlichen Bauteils ausgebildet ist, das in einer radialen Ausnehmung des Innenteiles fixiert und abgedichtet aufgenommen ist, wobei die radiale Trennung des Innenteils im Bereich seiner Ausnehmung vorgesehen ist.

Vorteilhaft ist bei dieser Ausführungsform, daß das den Drosselkanal aufweisende Bauteil einfach zu montieren ist, wobei durch Verwendung von wenigen Einzelteilen auch eine Vormontage des gesamten Bauteiles möglich ist, so daß das Bauteil während der Montage als Einheit axial aufgeschoben werden kann.

In Ausgestaltung der Erfindung ist zwischen dem Drosselkanal und dem dem Innenteil zugewandten Bereich des Bauteiles eine Dichtung angeordnet.

Nach einer weiteren wesentlich Ausführungsform ist vorgesehen, daß die Dichtung in einer Nut im Bereich der Trennebene des Bauteiles vorgesehen ist.

In weiterer Ausgestaltung der Erfindung weist das Bauteil in seinem äußeren Bereich einen Anschlagpuffer auf.

Vorteilhaft ist hierbei, daß der Anschlagpuffer in einer Öffnung des Bauteiles eingeknöpft ist und daß als Öffnung eine Schwalbenschwanznut vorgesehen ist.

Nach einer weiteren Ausgestaltung der Erfindung sind die beiden Teile des Innenteiles auf den einander benachbarten Stirnseiten mit jeweils einem Ansatz zur Bildung der Ausnehmung versehen.

Nach einer weiteren wesentlichen Ausführungsform ist vorgesehen, daß mindestens eines der Teile des Innenteils im Bereich der Ausnehmung mit einem gezielten Gummiüberlauf zur Bildung einer Dichtung vorgesehen ist.

Bevorzugte Ausführungsbeispiele sind in den Zeichnungen schematisch dargestellt.

Es zeigt:
Figur 1 ein Gummilager im Schnitt mit einem Drosselkanal und einer membranartigen Stirnwand als Einzelteil
Figur 2 das in Figur 1 dargestellte Gummilager in Ansicht
Figur 3 ein weiteres Bauteil mit einem Drosselkanal im Schnitt.

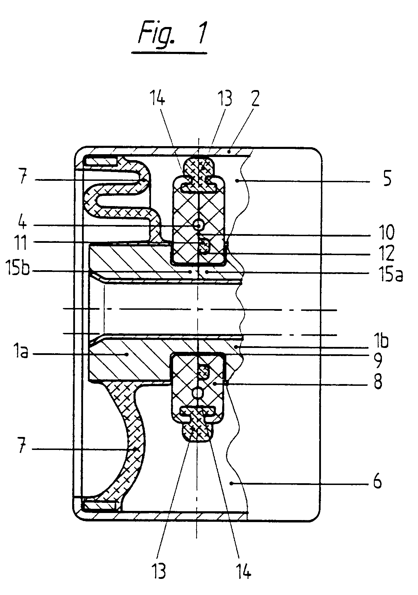

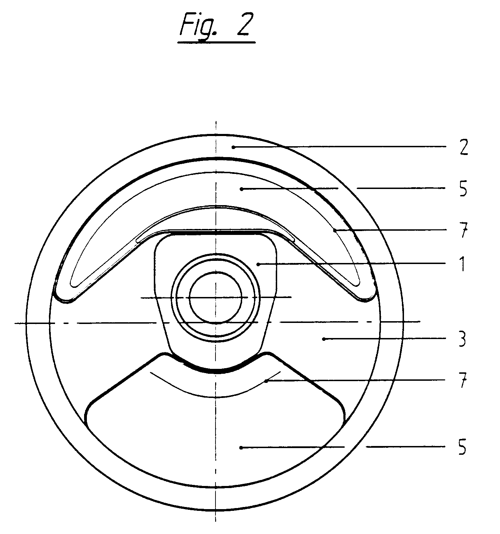

Bei dem in den Figuren 1 und 2 dargestellten hydraulisch dämpfenden Gummilager handelt es sich um das Innenteil 1 und das Außenteil 2, wobei zwischen dem Innenteil 1 und dem Außenteil 2 die Gummifeder 3 eingebracht ist. Die Gummifeder 3 bildet die Kammern 5 und 6, wobei die Stirnwände durch membranartige Stirnwände 7 abgedichtet sind.

Das Innenteil 1 ist in die Teile 1a und 1b unterteilt, so daß die Gummifeder 3 zusammen mit den membranartigen Stirnwänden hinterschnittfrei ausgebildet sind und somit eine einwandfreie Fertigung gewährleistet ist, indem die Stirnwand 7 entsprechend entformt werden kann. Durch die beiden Teile 1a und 1b läßt sich eine Ausnehmung 9 schaffen, in die das den Drosselkanal 4 enthaltene Bauteil 8 eingebracht werden kann.

Zur einwandfreien Montage kann somit axial hintereinander zunächst das Teil 1a zusammen mit der Stirnwand 7 und der Gummifeder 3, anschließend das Bauteil 8 und danach das Teil 1b eingebracht werden, so daß durch eine entsprechende Fixierung eine einwandfreie Montage gewährleistet ist.

Das Bauteil 8 ist dabei im Bereich der Trennebene 10 längs geteilt, so daß sowohl der Drosselkanal 4 im Bereich der Trennebene eingebracht werden kann als auch eine weitere Nut zur Aufnahme einer Dichtung 11. Für den Fall, daß Anschlagpuffer 13 benötigt werden, lassen diese sich ebenfalls im Bereich der Trennebene 10 einknöpfen. Die Herstellung des Bauteiles 8 läßt sich somit als Einheit vorfertigen, indem in die Nut 12 die Dichtung 11 eingelegt wird, der Drosselkanal entsprechend eingebracht und gegebenenfalls ein Anschlagpuffer 13 eingeknöpft, so daß nach anschließendem Verbinden der beiden Hälften des Bauteiles 8 ein fertiges Bauteil 8 zusammen mit einem Drosselkanal 4 entstanden ist. Durch einen gezielten Gummiüberlauf im Bereich der Ausnehmung 9 kann zusammen mit der Dichtung 12 nicht nur eine einfache Montage, sondern auch eine exakte Abdichtung des Bauteiles 8 gegenüber dem Innenteil 1 erfolgen.

Der Anschlagpuffer 13 läßt sich dabei im Bauteil 8 in einer Öffnung 14, z.B. in Form einer Schwalbenschwanznut einbringen. Die Bildung der Ausnehmung 9 kann in Form der Ansätze 15a und 15b der Teile 1a und 1b vorgenommen werden, so daß bei der axialen Auffädelung der Innenteile die Nut 9 geschaffen wird.

In Figur 1 ist als Einzelteil eine membranartige Stirnwand 7 zusammen mit den Teilen 1a und 1b gezeigt, wobei das Bauteil 8 einen Drosselkanal 4 aufweist und die Dichtung 11 in einer Nut 12 angeordnet ist.

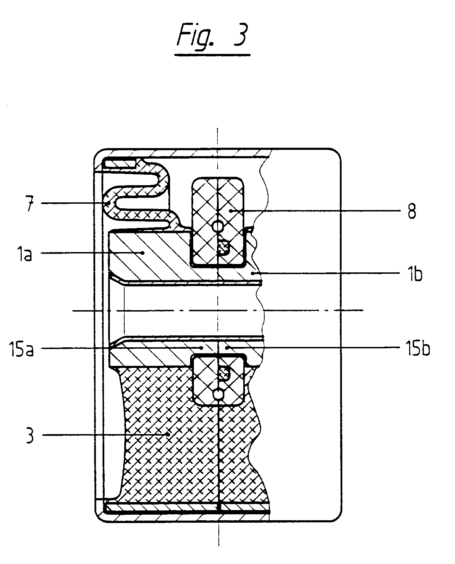

Figur 3 zeigt ein Teil 1a mit einer membranartigen Stirnwand 7 sowie eine Gummifeder 3, wobei auf dem Ansatz 15a das Bauteil 8 axial aufgebracht werden kann.

## Patentansprüche

1. Hydraulisch dämpfendes Gummilager, bestehend aus einem in radialer Richtung geteilten Innenteil (1), einem hierzu in radialem Abstand angeordneten Außenteil (2), einer zwischen Innenteil (1) und Außenteil (2) eingesetzten Gummifeder (3) und einem zusätzlichen Bauteil (8), in welchem Gummilager mindestens zwei dämpfungsmittelgefüllte, hydraulisch über mindestens einen Drosselkanal (4) miteinander verbundene Kammern (5, 6) vorgesehen sind, wobei mindestens eine der Kammern (5) in mindestens einem Teilbereich ihrer axialen Begrenzung durch eine einstückig mit der Gummifeder (3) ausgebildete, axial und/oder radial verformbare, membranartige Stirnwand (7) begrenzt ist und wobei das zusätzliche Bauteil (8) den Drosselkanal (4) aufweist,
dadurch gekennzeichnet,
daß das zusätzliche Bauteil (8) zweigeteilt ist durch eine radial verlaufende Trennebene (10), in der der Drosselkanal (4) durch die einander zugewandten Stirnseiten der beiden Hälften des zusätzlichen Bauteils (8) ausgebildet ist, das in einer radialen Ausnehmung (9) des Innenteiles (1) fixiert und abgedichtet aufgenommen ist, wobei die radiale Trennung des Innenteils (1) im Bereich seiner Ausnehmung (9) vorgesehen ist.

2. Gummilager nach Anspruch 1,
dadurch gekennzeichnet,
daß zwischen dem Drosselkanal (4) und dem dem Innenteil (1) zugewandten Bereich des Bauteiles (8) eine Dichtung (11) angeordnet ist.

3. Gummilager nach Anspruch 2,
dadurch gekennzeichnet,
daß die Dichtung (11) in einer Nut (12) im Bereich der Trennebene (10) des Bauteiles (8) vorgesehen ist.

4. Gummilager nach Anspruch 1,
dadurch gekennzeichnet,
daß das Bauteil (8) in seinem äußeren Bereich einen Anschlagpuffer (13) aufweist.

5. Gummilager nach Anspruch 4,
dadurch gekennzeichnet,
daß der Anschlagpuffer (13) in einer Öffnung (14) des Bauteiles (8) eingeknöpft ist.

6. Gummilager nach Anspruch 5,
dadurch gekennzeichnet,
daß als Öffnung (14) eine Schwalbenschwanznut vorgesehen ist.

7. Gummilager nach Anspruch 1,
dadurch gekennzeichnet,
daß die beiden Teile (1a, 1b) des Innenteiles (1) auf den einander benachbarten Stirnseiten mit jeweils einem Ansatz (15a, 15b) zur Bildung der Ausnehmung (9) versehen sind.

8. Gummilager nach Anspruch 1,
dadurch gekennzeichnet,
daß mindestens eines der Teile (1a, 1b) des Innenteils (1) im Bereich der Ausnehmung (9) mit einem gezielten Gummiüberlauf zur Bildung einer Dichtung vorgesehen ist.

## Claims

1. Hydraulically damped rubber mounting comprising an inner member (1) which is divided radially, an outer member (2) arranged radially spaced from it, a rubber spring (3) inserted between the inner member (1) and outer member (2) and additional component (8), in which rubber mounting there are provided at least two chambers (5,6) filled with damping medium and connected together hydraulically through at least one restricted passage (4), at least one of the chambers (5) being bounded in at least one partial region of its axial limits by an axially and/or radially deformable diaphragm-like face wall (7) made in one piece with the rubber spring (3), and the additional component (8) containing the restricted passage (4),
characterised in that,
the additional component (8) is divided into two parts by a radially extending dividing plane (10) in which the restricted passage (4) is formed by the mutually facing surfaces of the two halves of the additional component (8), which is located in a radial recess (9) in the inner member (1) and received in a sealing manner, the radial division of the inner member (1) being provided in the region of its recess (9).

2. Rubber mounting according to claim 1,
characterised in that,
a seal (11) is arranged between the restricted passage (4) and that region of the component (8) which faces the inner member (1).

3. Rubber mounting according to claim 2,
characterized in that,
the seal (11) is provided in a groove (12) in the region of the dividing plane (10) of the component (8).

4. Rubber mounting according to claim 1,
characterised in that,
the component (8) has a buffer stop (13) in its outer region.

5. Rubber mounting according to claim 4,
characterized in that,
the buffer stop (13) is snapped into an opening (14) in the component (8).

6. Rubber mounting according to claim 5,
characterized in that,
a dovetail groove is provided as the opening (14).

7. Rubber mounting according to claim 1,
characterized in that,
the two parts (1a, 1b) of the inner member (1) are provided on the mutually facing surfaces with respective projections (15a, 15b) to form the recess (9).

8. Rubber mounting according to claim 1,
characterized in that,
at least one of the parts (1a, 1b) of the inner member (1) is provided in the region of the recess (9) with a deliberate excess of rubber to form a seal.

## Revendications

1. Support élastique ou élastomère à amortissement hydraulique, comprenant une pièce intérieure (1) subdivisée en direction radiale, une pièce extérieure (2) agencée à distance radialement de cette pièce intérieure, un ressort en caoutchouc (3) mis en place entre la partie intérieure (1) et la pièce extérieure (2), et un composant supplémentaire (8), au moins deux chambres (5, 6) remplies d'un fluide d'amortissement et reliées l'une à l'autre hydrauliquement via au moins un conduit à étranglement (4) étant prévues dans ledit support élastique, l'une au moins des chambres (5) étant limitée dans au moins une région partielle de son étendue axiale par une paroi frontale (7) analogue à une membrane, réalisée d'une seule pièce avec le ressort en caoutchouc (3) et susceptible d'être déformée axialement et/ou radialement, et le composant supplémentaire (8) comportant le conduit à étranglement (4), caractérisé en ce que le composant supplémentaire (8) est divisé en deux parties par un plan de séparation (10) qui s'étend radialement, le conduit à étranglement (4) étant réalisé au moyen des deux faces frontales dirigées l'une vers l'autre des deux moitiés du composant supplémentaire (8), ce dernier étant fixé et reçu de façon étanche dans un évidement radial (9) de la pièce intérieure (1), et la séparation radiale de la pièce intérieure (1) étant prévue dans la région de son évidement (9).

2. Support élastique selon la revendication 1, caractérisé en ce qu'entre le conduit à étranglement (4) et la région du composant (8) orientée vers la pièce intérieure (1) est agencé un joint (11).

3. Support élastique selon la revendication 2, caractérisé en ce que le joint (11) est prévu dans une gorge (12) dans la région du plan de séparation (10) du composant (8).

4. Support élastique selon la revendication 1, caractérisé en ce le composant (8) comporte dans sa région extérieure un tampon de butée (13).

5. Support élastique selon la revendication 4, caractérisé en ce le tampon de butée (13) est boutonné dans une ouverture (14) du composant (8).

6. Support élastique selon la revendication 5, caractérisé en ce qu'il est prévu une gorge en queue d'aronde en tant qu'ouverture (14).

7. Support élastique selon la revendication 1, caractérisé en ce les deux parties (1a, 1b) de la pièce intérieure (1) sont pourvues chacune d'un talon (15a, 15b) sur leurs faces frontales voisines l'une de l'autre afin de former l'évidement (9).

8. Support élastique selon la revendication 1, caractérisé en ce que l'une au moins des parties (1a, 1b) de la pièce intérieure (1) est dotée dans la région de l'évidement (9) d'un débordement de caoutchouc spécifique pour former une étanchéité.
